# EUROPEAN PATENT SPECIFICATION

(11) **EP 2 785 113 B1**
(45) Date of publication and mention of the grant of the patent: **21.03.2018**
(21) Application number: 13807880.3
(22) Date of filing: 09.10.2013
(51) Int. Cl.: H04W 52/02

(54) **METHOD AND APPARATUS FOR WAKING UP DEVICE**
VERFAHREN UND VORRICHTUNG ZUM AUFWECKEN EINER VORRICHTUNG
PROCÉDÉ ET APPAREIL PERMETTANT DE RÉVEILLER UN DISPOSITIF

(30) Priority: 04.02.2013 CN 201310042704
(43) Date of publication of application: 01.10.2014
(73) Proprietor: Huawei Device Co., Ltd., Shenzhen, Guangdong 518129 (CN)
(72) Inventor: ZHAO, Xuewen, Shenzhen Guangdong 518129 (CN); LIN, Haifeng, Shenzhen Guangdong 518129 (CN)
(74) Representative: Isarpatent
(86) International application number: PCT/CN2013/084900
(87) International publication number: WO 2014/117535

(56) References cited:
- WO-A1-2011/124853
- WO-A1-2011/124853
- WO-A1-2012/114969
- CN-A- 1 816 789
- CN-A- 101 541 068
- CN-A- 102 265 702
- CN-A- 102 421 134

## Description

### TECHNICAL FIELD

The present invention relates to the field of communications, and in particular, to a method and an apparatus for waking up a device.

### BACKGROUND

With the development of mobile communications technologies, a wireless fidelity (wireless fidelity, Wi-Fi for short) technology has become a wireless network transmission technology used most widely nowadays. A user only needs to use a device supporting Wi-Fi in a Wi-Fi coverage area to connect to a Wi-Fi network, so that the user can quickly browse web pages, send and receive emails, and so on.

Currently, a Wi-Fi access point (access point, AP for short) device needs to keep working for a long time so that it can be accessed by a Wi-Fi station (STA) at any time and used by a user conveniently. However, it is impossible that Wi-Fi STAs access a normal Wi-Fi AP device for 24 hours every day. The Wi-Fi AP device is in an idle state in a long period of time, which causes a waste of network resources. Furthermore, if a portable Wi-Fi AP device powered by batteries is unable to enter a standby state, the Wi-Fi AP device continues to be powered by the batteries when it is not accessed by a Wi-Fi STA. Consequently, the service time of the Wi-Fi AP device is shortened, and the service life of the batteries is also affected.

A solution in the prior art is as follows: When the Wi-Fi AP device is not accessed by a Wi-Fi STA, the Wi-Fi AP device automatically enters the standby state after a period of time. If the user needs to continue to use Wi-Fi, the user needs to wake up the Wi-Fi AP device by pressing a key or using other control manners, so that the Wi-Fi AP device reenters an enabled state.

In the prior art, after the Wi-Fi AP device enters the standby state, the user needs to wake up the Wi-Fi AP device by pressing a key or using other control manners before the user can continue to use Wi-Fi. Therefore, user experience is poor. Therefore, how to effectively wake up the Wi-Fi AP device has become an important topic in this technical field.

WO 2011/124853 A1 discloses a method of control of an access point. The access point may detect periodically, whether a station is transmitting a signal. If a transmission is detected, the access point switches on.

WO 2012/114969 A1 relates to a terminal device and a wireless base station. The terminal device transmits a frame having a particular frame length or amplitude representing an ID of the base station. The wireless base station detects the ID, and if the detected ID is identical with its own ID, the base station switches from a sleep mode to an operating mode.

### SUMMARY

Embodiments of the present invention provide a method and an apparatus for waking up a device, which improve user experience in a device wake-up process.

According to a first aspect of the present invention, a method for waking up a device is provided and includes:
when a timing interval of a timer is equal to a preset threshold, detecting, by a first device, whether a second device transmits a radio signal, where the first device is a device waked up by the second device;
   determining, according to pre-stored wake-up information, whether the second device corresponding to the detected radio signal may wake up the first device;
   when the radio signal is detected, preforming the following steps:
      switching, by the first device, to a station, STA, mode;
      transmitting, by the first device, a first message to the second device, so that the second device switches to a station STA mode after receiving the first message, where the first message is used to notify the second device that the first device is waked up successfully; and
      switching, by the first device, to an access point AP mode, so that the second device implements wireless fidelity Wi-Fi access through the first device,
      wherein the second device is switched to the AP mode for a duration T2 = T0 + 2 * T1, T0 being the preset threshold and T1 being a duration of a detection and access attempt for the first device; and
      when the radio signal is not detected, disabling, by the first device, the Wi-Fi and restarting the timer,
      wherein the wake-up information are registered by the second device with the first device, when the second device implements Wi-Fi access through the first device to pre-store the wake-up information of the second device in the memory, and
wherein the wake-up information comprise a Wi-Fi network identifier of the second device, a ciphering mode and/or a password.

With reference to the first aspect, in a possible implementation manner, the transmitting, by the first device when the radio signal is detected, a first message to the second device, includes:
if the radio signal is detected, implementing, by the first device, the Wi-Fi access through the second device; and
transmitting, by the first device, the first message to the second device, where the first message carries a switching time to instruct the second device to switch to the STA mode within the switching time.

With reference to the first aspect or the foregoing possible implementation manner, in another possible implementation manner, when a timing interval of a timer is equal to a preset threshold, before the detecting, by a first device, whether a second device transmits a radio signal, the method further includes:
storing, by the first device, wake-up information of the second device, where the wake-up information includes at least a Wi-Fi network identifier; and
the detecting whether the second device transmits the radio signal specifically includes: detecting, by the first device according to the wake-up information, whether the second device transmits the radio signal.

With reference to the first aspect or the foregoing possible implementation manners, in another possible implementation manner the method for waking up a device is provided and includes:
when a timing interval of a timer is equal to a preset threshold, entering, by a first device, an access point AP mode, where the first device is a device waked up by a second device;
detecting, by the first device, whether a wake-up password transmitted by the second device is received;
when the wake-up password is detected, transmitting, by the first device, a first message to the second device, so that the second device switches to a station STA mode after receiving the first message, and the second device implements wireless fidelity Wi-Fi access through the first device, where the first message is used to notify the second device that the first device is waked up successfully; and
when the wake-up password is not detected, disabling, by the first device, the Wi-Fi and restarting the timer.

With reference to the first aspect or the foregoing possible implementation manners, in a possible implementation manner, the transmitting, by the first device when the wake-up password is detected, a first message to the second device, includes:
when the wake-up password is detected, detecting, by the first device, whether the second device corresponding to the wake-up password exists in a pre-stored list of devices that can wake up the first device; and
if the second device corresponding to the wake-up password exists in the pre-stored list of devices that can wake up the first device, performing the transmitting of the first message to the second device.

According to a second aspect of the present invention, an apparatus for waking up a device is provided and includes:
a processor, configured to detect, when a timing interval of a timer is equal to a preset threshold, whether a second device transmits a radio signal, where the first device is a device waked up by the second device;
a transmitter, configured to transmit a first message to the second device when the processor detects the radio signal, so that the second device switches to a station, STA, mode after receiving the first message, where the first message is used to notify the second device that the first device is waked up successfully;
a memory, configured to store wake-up information of the second device before the processor detects whether the second device transmits the radio signal when the timing interval of the timer is equal to the preset threshold,
wherein the wake-up information are registered by the second device with the first device, when the second device implements Wi-Fi access through the first device to pre-store the wake-up information of the second device in the memory, and
wherein the wake-up information comprise a Wi-Fi network identifier of the second device, a ciphering mode and/or a password; and
when the radio signal is detected:
the processor is further configured to detect, according to the wake-up information stored by the memory, whether the second device transmitting the detected radio signal may wake-up the first device, and to switch to a station, STA, mode,
the transmitter is configured to transmit the first message to the second device, so that the second device switches to the STA mode after receiving the first message; and then
the processor is further configured to switch to an access point AP mode, so that the second device implements wireless fidelity Wi-Fi access through the first device, wherein the second device is switched to the AP mode for a duration T2 = T0 + 2 * T1, T0 being the preset threshold and T1 being a duration of a detection and access attempt for the first device.

With reference to the second aspect, in a possible implementation manner
the processor is further configured to implement the Wi-Fi access through the second device when the radio signal is detected; and
the transmitter is further configured to transmit the first message to the second device, where the first message carries a switching time to instruct the second device to switch to the STA mode within the switching time.

According to the second aspect of the present invention r,
the processor is configured to detect whether a wake-up password transmitted by a second device is received;
the transmitter is configured to transmit the first message to the second device when the processor detects the wake-up password, so that the second device switches to a the STA mode after receiving the first message, and the second device implements wireless fidelity Wi-Fi access through the first device, where the first message is used to notify the second device that the first device is waked up successfully.

With the method and apparatus for waking up a device according to the embodiments of the present invention, a timing interval of a timer is equal to a preset threshold; when a first device detects a radio signal transmitted by a second device, the first device transmits a first message to the second device, where the first message is used to instruct the second device to switch to a station STA mode; in this case, the first device is waked up, that is, the first device switches to an AP mode, so that the second device may implement Wi-Fi access through the first device. The first device switches to the AP mode when the radio signal of the second device is detected, which improves user experience in a device wake-up process; in addition, the first device enters a standby mode when the radio signal of the second device is not detected, which effectively reduces power consumption of the first device and prolongs the standby time and service life of batteries.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for waking up a device according to an embodiment of the present invention;
FIG. 2 is a schematic flowchart of another method for waking up a device according to an embodiment of the present invention;
FIG. 3 is a schematic flowchart of another method for waking up a device according to an embodiment of the present invention;
FIG. 4 is a schematic flowchart of another method for waking up a device according to an embodiment of the present invention;
FIG. 5 is a schematic structural diagram of an apparatus for waking up a device according to an embodiment of the present invention;
FIG. 6 is a schematic structural diagram of composition of another apparatus for waking up a device according to an embodiment of the present invention;
FIG. 7 is a schematic structural diagram of composition of another apparatus for waking up a device according to an embodiment of the present invention;
FIG. 8 is a schematic structural diagram of composition of another apparatus for waking up a device according to an embodiment of the present invention;
FIG. 9 is a schematic structural diagram of composition of another apparatus for waking up a device according to an embodiment of the present invention;
FIG. 10 is a schematic structural diagram of composition of another apparatus for waking up a device according to an embodiment of the present invention;
FIG. 11 is a schematic structural diagram of composition of another apparatus for waking up a device according to an embodiment of the present invention;
FIG. 12 is a schematic structural diagram of composition of another apparatus for waking up a device according to an embodiment of the present invention; and
FIG. 13 is a schematic structural diagram of composition of another apparatus for waking up a device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

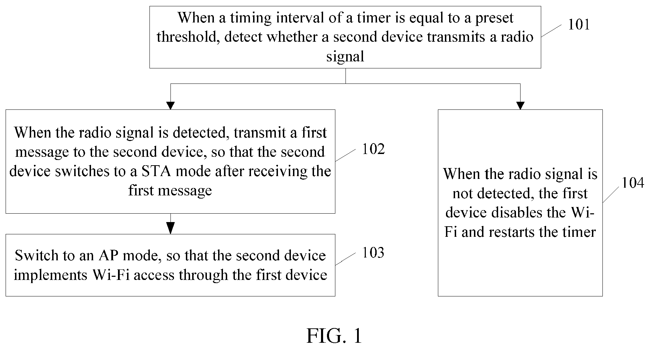

An embodiment of the present invention provides a method for waking up a device. As shown in FIG. 1, the method may include the following:

101. When a timing interval of a timer is equal to a preset threshold, a first device detects whether a second device transmits a radio signal.

The first device is a device that may be waked up by the second device. Specifically, when no device accesses the first device within a preset time, the first device disables Wi-Fi and enters a standby mode. In this case, the first device may start a timer, and detect, when the timing interval of the timer is equal to the preset threshold, whether the second device transmits a radio signal. When the second device needs to implement Wi-Fi access through the first device, the second device may switch to an AP mode. In this case, the second device may transmit a radio signal.

102. When the radio signal is detected, the first device transmits a first message to the second device, so that the second device switches to a STA mode after receiving the first message.

When the first device detects the radio signal of the second device, the first device learns that the second device needs to implement Wi-Fi access through the first device. In this case, the first device transmits the first message to the second device, where the first message is used to notify the second device that the first device is waked up successfully. When the second device receives the first message, the second device switches to the STA mode, and further prepares for Wi-Fi access.

103. The first device switches to the AP mode, so that the second device implements Wi-Fi access through the first device.

The first device may also switch to the AP mode after transmitting the first message to the second device, so that the second device implements Wi-Fi access through the first device.

104. When the radio signal is not detected, the first device disables the Wi-Fi and restarts the timer.

When the first device does not detect the radio signal of the second device, the first device disables the Wi-Fi, reenters the standby mode, and restarts the timer.

With the method for waking up a device according to the embodiment of the present invention, a timing interval of a timer is equal to a preset threshold; when a first device detects a radio signal transmitted by a second device, the first device transmits a first message to the second device, where the first message is used to instruct the second device to switch to a station STA mode; in this case, the first device is waked up, that is, the first device switches to an AP mode, so that the second device may implement Wi-Fi access through the first device. The first device switches to the AP mode when the radio signal of the second device is detected, which improves user experience in a device wake-up process; in addition, the first device enters a standby mode when the radio signal of the second device is not detected, which effectively reduces power consumption of the first device and prolongs the standby time and service life of batteries.

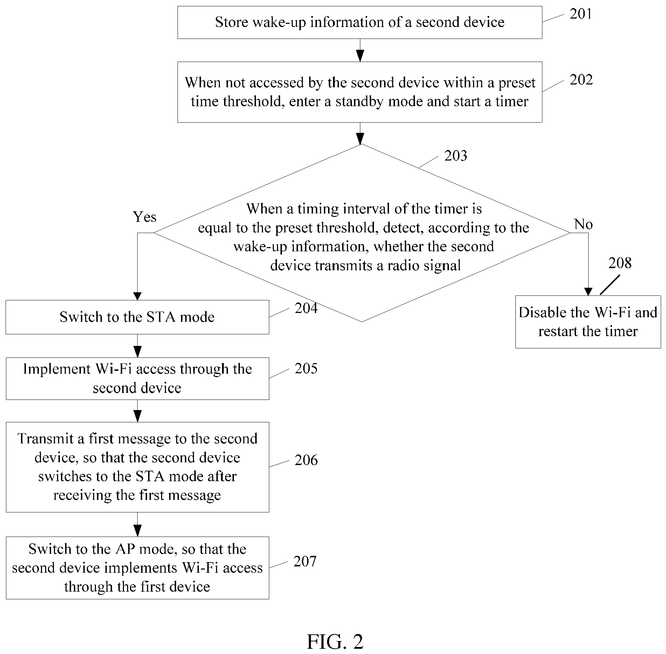

An embodiment of the present invention provides a method for waking up a device, where the method is applicable to a first device, where the first device may be a device such as a smartphone that supports both a Wi-Fi AP mode and a Wi-Fi STA mode. As shown in FIG. 2, the method may include the following:

201. A first device stores wake-up information of a second device.

The first device may pre-store wake-up information of the second device in the first device, so that the information is used when wake-up is implemented subsequently. The method for pre-storing wake-up information of the second device may be as follows: When the second device implements Wi-Fi access through the first device, the second device registers the wake-up information with the first device, or the wake-up information of the second device may also be directly configured in the first device. The embodiment of the present invention does not limit the manner of storing the wake-up information.

Optionally, the first device may locally maintain a list of devices that can wake up the first device, where the devices corresponding to the wake-up information stored in the list of devices that can wake up the first device may all wake up the first device.

It should be noted that the wake-up information in the embodiment of the present invention includes a Wi-Fi network identifier of the second device, and may also include a ciphering mode and/or password.

202. When not accessed by the second device within a preset time threshold, the first device enters a standby mode and starts a timer.

Specifically, to avoid a waste of network resources because the first device keeps in an enabled state when it is not accessed by a Wi-Fi STA, if no second device accesses the first device within the preset time threshold, the first device may disable the Wi-Fi function and enter a standby state and start a timer *T*₀ at the same time.

203. When a timing interval of the timer is equal to the preset threshold, the first device detects, according to the wake-up information, whether the second device transmits a radio signal; and when the radio signal is detected, performs the following steps 204-207; or when the radio signal is not detected, performs the following step 208.

When the timer *T*₀ is equal to the preset threshold, the first device may detect, according to the wake-up information, whether the second device transmits the radio signal. Specifically, when the first device scans whether a device transmits a radio signal, it is possible that the first device detects multiple radio signals; in this case, the first device may determine, according to the pre-stored wake-up information, whether the device corresponding to each radio signal may wake up the first device. When the second device needs to wake up the first device, the second device switches to the AP mode by using the wake-up information that is pre-registered with the first device and transmits a radio signal. In this case, when the timer *T*₀ is equal to the preset threshold, the first device may detect the radio signal. To ensure that the first device may implement Wi-Fi access through the second device, the second device is in the AP mode for a duration of *T*₂=*T*₀ + 2×*T*₁, where *T*₁ is the duration of a detection and access attempt for the first device.

Optionally, when the first device maintains a list of devices that can wake up the first device, the first device may scan whether the second device that is in the list of devices that can wake up the first device transmits a radio signal.

204. The first device switches to the STA mode.

The first switches to the STA mode to prepare for communication with the second device.

It should be noted that the first device may switch to the STA mode when the timing interval of the timer is equal to the preset threshold, or may switch to the STA mode when detecting a radio signal. The time at which the first device switches to the STA mode is not limited by the embodiment of the present invention.

205. The first device implements Wi-Fi access through the second device.

When the first device detects the radio signal, the first device may switch to the STA mode. In this case, the first device may implement Wi-Fi access through the second device to communicate with the second device.

206. The first device transmits a first message to the second device, so that the second device switches to the STA mode after receiving the first message.

When the first device implements Wi-Fi access through the second device, the first device may transmit the first message to the second device, where the first message is used to notify the second device that the first device is waked up successfully. The first message may further carry a switching time to notify the second device that the first device is waked up after the switching time, that is, the first device switches to the AP mode after the switching time. The second device may switch to the STA mode within the switching time after receiving the first message to implement Wi-Fi access through the first device.

Optionally, the switching time may also be preset in the second device, that is, after the second device receives the first message, the second device may learn, according to the preset switching time, that the first device is waked up successfully after the second device receives the first message and waits for the switching time.

207. The first device switches to the AP mode, so that the second device implements Wi-Fi access through the first device.

The first device may switch to the AP mode after transmitting the first message to the second device, so that the second device implements Wi-Fi access through the first device.

208. The first device disables the Wi-Fi and restarts the timer.

When the first device does not detect the radio signal of the second device, the first device disables the Wi-Fi and restarts the timer.

With the method for waking up a device according to the embodiment of the present invention, a timing interval of a timer is equal to a preset threshold; when a first device detects a radio signal transmitted by a second device, the first device transmits a first message to the second device, where the first message is used to instruct the second device to switch to a station STA mode; in this case, the first device is waked up, that is, the first device switches to an AP mode, so that the second device may implement Wi-Fi access through the first device. The first device switches to the AP mode when the radio signal of the second device is detected, which improves user experience in a device wake-up process; in addition, the first device enters a standby mode when the radio signal of the second device is not detected, which effectively reduces power consumption of the first device and prolongs the standby time and service life of batteries.

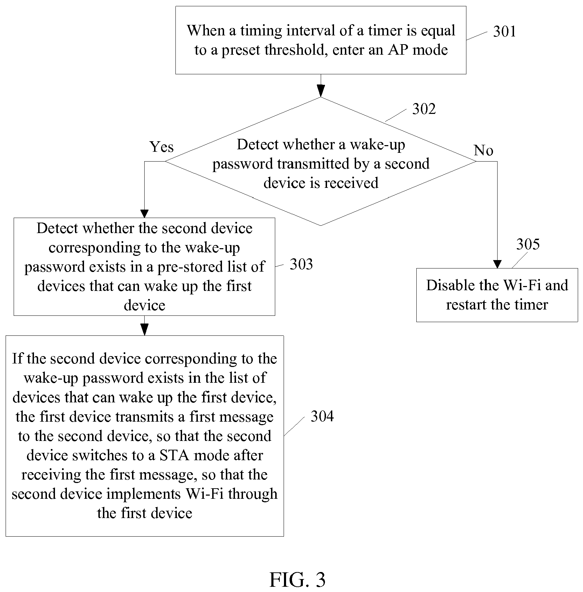

An embodiment of the present invention provides a method for waking up a device, where the method is applicable to a first device, where the first device may be a device that supports a Wi-Fi AP mode. As shown in FIG. 3, the method includes the following:

301. When a timing interval of a timer is equal to a preset threshold, a first device enters an AP mode.

The first device may enter a standby mode when no second device accesses the first device within a period of time, start a timer *T*₀ at the same time, and when the timer *T*₀ is equal to the preset threshold, switch to a working state, namely, enter the AP mode.

302. The first device detects whether a wake-up password transmitted by a second device is received; and when the wake-up password is detected, perform the following steps 303 and 304; or when the wake-up password is not detected, perform the following step 305.

When the second device needs to implement Wi-Fi access through the first device, the second device may switch to the AP mode. In this case, the second device broadcasts a wake-up password at a time interval. The first device may detect whether the wake-up password transmitted by the second device is received. To ensure that the first device can receive the wake-up password transmitted by the second device, the time interval *T*₂ at which the second device broadcasts the wake-up password needs to be less than *T*₁, where *T*₁ is the time when the first device attempts to receive the wake-up password.

Optionally, the second device may also directly transmit the wake-up password to the first device.

It should be noted that the format and content of the wake-up password are pre-agreed by the first device and second device. In addition, the wake-up password broadcast by the second device may be implemented by adding Wi-Fi signaling, such as in a signaling format similar to a beacon frame, or by extending existing signaling, for example, by adding a vendor (a customized field) to probe req (probe request) and probe rsp (probe response) frames. The embodiment of the present invention does not limit the format and content of the wake-up password and the transmission mode.

303. The first device detects whether the second device corresponding to the wake-up password exists in a pre-stored list of devices that can wake up the first device.

After receiving the wake-up password, the first device may detect whether the second device corresponding to the wake-up password exists in the list of devices that can wake up the first device. The list of devices that can wake up the first device may store second device information and the wake-up password required for the second device to wake up the first device, where the second device information and wake-up password may be added and stored by the first device to the list of devices that can wake up the first device when the second device implements Wi-Fi access through the first device, or may also be preset in the list of devices that can wake up the first device of the first device. The embodiment of the present invention does not limit the process of storing the second device information and wake-up password.

304. If the second device corresponding to the wake-up password exists in the list of devices that can wake up the first device, the first device transmits a first message to the second device, so that the second device switches to a STA mode after receiving the first message, so that the second device implements Wi-Fi through the first device.

When the second device corresponding to the wake-up password exists in the list of devices that can wake up the first device, the first device may transmit the first message to the second device to notify the second device that the first device is waked up successfully, where the first message may be transmitted in a broadcast manner, or may also be transmitted by the first device to the second device in a directed manner. The second device switches to the STA mode after receiving the first message, so that the second device implements Wi-Fi access through the first device. Then the whole wake-up process is completed.

305. The first device disables the Wi-Fi and restarts the timer.

When the wake-up password is not detected, the Wi-Fi may be disabled, and the timer may be restarted.

With the method for waking up a device according to the embodiment of the present invention, when a timing interval of a timer is equal to a preset threshold, a first device enters an AP mode, and when the first device detects a wake-up password transmitted by a second device, the first device transmits a first message to the second device, notifying the second device that the first device is waked up; in this case, the second device switches to a STA mode after receiving the first message transmitted by the first device, so that the second device may implement Wi-Fi access through the first device. When the wake-up password of the second device is detected, the first device notifies the second device that the first device is waked up, which improves user experience in a device wake-up process; in addition, when the wake-up password of the second device is not detected, the first device enters a standby mode, which effectively reduces power consumption of the first device and prolongs the standby time and service life of batteries.

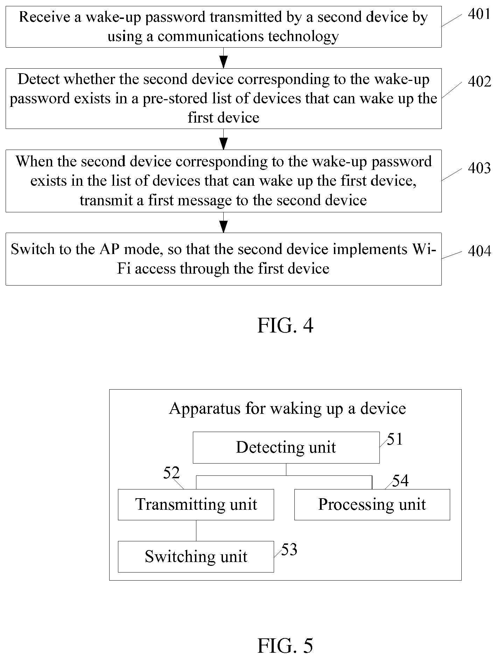

An embodiment of the present invention provides a method for waking up a device. As shown in FIG. 4, the method includes the following:

401. A first device receives a wake-up password transmitted by a second device by using a communications technology.

The first device may disable Wi-Fi and enter a standby mode when no second device accesses the first device within a period of time. When the second device needs to implement Wi-Fi access through the first device, the second device may transmit a wake-up password to the first device by using the communications technology. The communications technology may be short message service, voice data calling, Bluetooth, and so on.

It should be noted that the format and content of the wake-up password are pre-agreed by the first device and second device. The embodiment of the present invention does not limit the format and content of the wake-up password.

402. The first device detects whether the second device corresponding to the wake-up password exists in a pre-stored list of devices that can wake up the first device.

When the first device receives the wake-up password transmitted by the second device, the first device may detect whether the second device corresponding to the wake-up password exists in the list of devices that can wake up the first device. The list of devices that can wake up the first device may store second device information and the wake-up password required for the second device to wake up the first device, where the second device information and wake-up password may be added and stored by the first device to the list of devices that can wake up the first device when the second device implements Wi-Fi access through the first device, or may also be preset in the list of devices that can wake up the first device of the first device. The embodiment of the present invention does not limit the process of storing the second device information and wake-up password.

403. When the second device corresponding to the wake-up password exists in the list of devices that can wake up the first device, the first device transmits a first message to the second device.

When detecting that the second device corresponding to the wake-up password exists in the list of devices that can wake up the first device, the first device may transmit the first message to the second device to notify the second device that the first device is waked up successfully, where the first message may further include a switching time, used to notify the second device that the first device switches to an AP mode after the switching time. The switching time may also be preset in the second device.

404. The first device switches to the AP mode, so that the second device implements Wi-Fi access through the first device.

The first device may switch to the AP mode, so that the second device implements Wi-Fi access through the first device.

With the method for waking up a device according to the embodiment of the present invention, when a first device receives a wake-up password transmitted by a second device by using a communications technology, the first device transmits a first message to the second device, where the first message is used to instruct the second device to switch to a STA mode, and switches itself to an AP mode, so that the second device implements Wi-Fi access through the first device, which improves user experience in a device wake-up process.

An embodiment of the present invention provides an apparatus for waking up a device. As shown in FIG. 5, the apparatus includes: a detecting unit 51, a transmitting unit 52, a switching unit 53, and a processing unit 54.

A device that supports Wi-Fi includes a Wi-Fi chip, where the Wi-Fi chip is connected to an antenna by using a radio frequency circuit, and is configured to transmit and receive Wi-Fi signals. In addition, the device includes an application (Application, APP) chip, where the APP chip is configured to run a processor of a Wi-Fi control module, where the Wi-Fi control module is configured to control the Wi-Fi chip. Thereby, the APP chip may control, by using the Wi-Fi control module, the Wi-Fi chip to switch to a STA mode or switch to an AP mode.

The detecting unit 51 is configured to detect, when a timing interval of a timer is equal to a preset threshold, whether a second device transmits a radio signal, where the first device is a device waked up by the second device.

The transmitting unit 52 is configured to transmit, when the detecting unit 51 detects the radio signal, a first message to the second device, so that the second device switches to a station STA mode after receiving the first message, where the first message is used to notify the second device that the first device is waked up successfully.

The switching unit 53 is configured to switch to an access point AP mode, so that the second device implements wireless fidelity Wi-Fi access through the first device.

The processing unit 54 is configured to disable the Wi-Fi when the detecting unit 51 does not detect the radio signal and restart the timer.

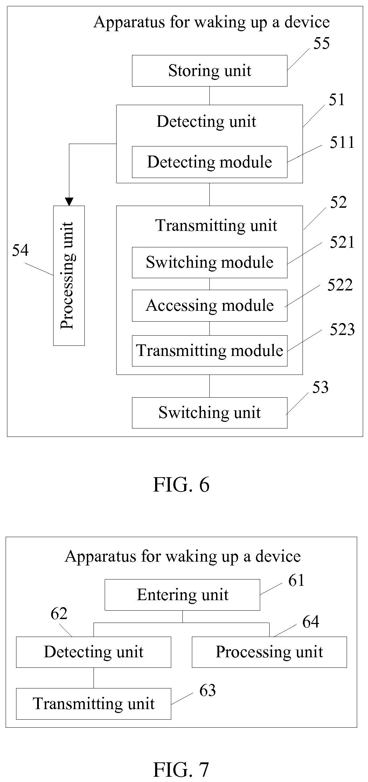

Further, as shown in FIG. 6, the transmitting unit 52 may include: a switching module 521, an accessing module 522, and a transmitting module 523.

The switching module 521 is configured to switch to the STA mode when the detecting unit 51 detects the radio signal.

The accessing module 522 is configured to implement the Wi-Fi access through the second device.

The transmitting module 523 is configured to transmit the first message to the second device, where the first message carries a switching time to instruct the second device to switch to the STA mode within the switching time.

Further, the apparatus may include a storing unit 55.

The storing unit 55 is configured to store wake-up information of the second device before the detecting unit 51 detects whether the second device transmits the radio signal when the timing interval of the timer is equal to the preset threshold, where the wake-up information includes at least a Wi-Fi network identifier.

The detecting unit 51 may include a detecting module 511.

The detecting module 511 is configured to detect, according to the wake-up information stored by the storing unit, whether the second device transmits the radio signal.

With the apparatus for waking up a device according to the embodiment of the present invention, a timing interval of a timer is equal to a preset threshold; when a first device detects a radio signal transmitted by a second device, the first device transmits a first message to the second device, where the first message is used to instruct the second device to switch to a station STA mode; in this case, the first device is waked up, that is, the first device switches to an AP mode, so that the second device may implement Wi-Fi access through the first device. The first device switches to the AP mode when the radio signal of the second device is detected, which improves user experience in a device wake-up process; in addition, the first device enters a standby mode when the radio signal of the second device is not detected, which effectively reduces power consumption of the first device and prolongs the standby time and service life of batteries.

An embodiment of the present invention provides an apparatus for waking up a device. As shown in FIG. 7, the apparatus includes: an entering unit 61, a detecting unit 62, a transmitting unit 63, and a processing unit 64.

A device that supports Wi-Fi includes a Wi-Fi chip, where the Wi-Fi chip is connected to an antenna by using a radio frequency circuit, and is configured to transmit and receive Wi-Fi signals. In addition, the device includes an application (Application, APP) chip, where the APP chip is configured to run a processor of a Wi-Fi control module, where the Wi-Fi control module is configured to control the Wi-Fi chip. Thereby, the APP chip may control, by using the Wi-Fi control module, the Wi-Fi chip to switch to a STA mode or switch to an AP mode.

The entering unit 61 is configured to enter the AP mode when a timing interval of a timer is equal to a preset threshold, where the first device is a device waked up by a second device.

The detecting unit 62 is configured to detect whether a wake-up password transmitted by the second device is received.

The transmitting unit 63 is configured to transmit a first message to the second device when the detecting unit 62 detects the wake-up password, so that the second device switches to the STA mode after receiving the first message, and the second device implements wireless fidelity Wi-Fi access through the first device, where the first message is used to notify the second device that the first device is waked up successfully.

The processing unit 64 is configured to disable the Wi-Fi when the detecting unit 62 does not detect the wake-up password and restart the timer.

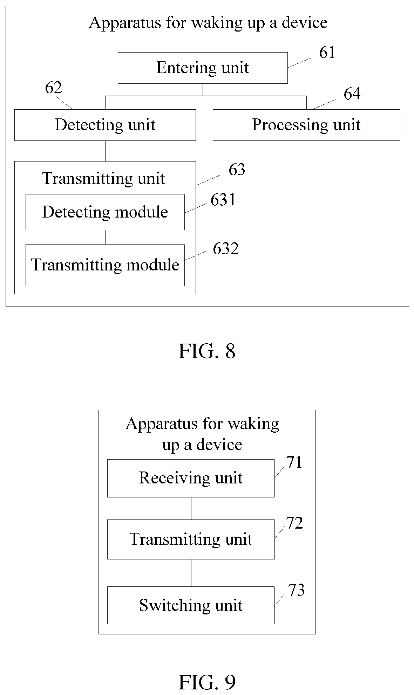

Further, as shown in FIG. 8, the transmitting unit 63 may include: a detecting module 631 and a transmitting module 632.

The detecting module 631 is configured to detect, when the detecting unit 62 detects the wake-up password, whether the second device corresponding to the wake-up password exists in a pre-stored list of devices that can wake up the first device.

The transmitting module 632 is configured to transmit the first message to the second device when the detecting module 631 detects that the second device corresponding to the wake-up password exists in the pre-stored list of devices that can wake up the first device.

With the apparatus for waking up a device according to the embodiment of the present invention, when a timing interval of a timer is equal to a preset threshold, a first device enters an AP mode, and when the first device detects a wake-up password transmitted by a second device, the first device transmits a first message to the second device, notifying the second device that the first device is waked up; in this case, the second device switches to a STA mode after receiving a wake-up complete message transmitted by the first device, so that the second device may implement Wi-Fi access through the first device. When the wake-up password of the second device is detected, the first device notifies the second device that the first device is waked up, which improves user experience in a device wake-up process; in addition, when the wake-up password of the second device is not detected, the first device enters a standby mode, which effectively reduces power consumption of the first device and prolongs the standby time and service life of batteries.

An embodiment of the present invention provides an apparatus for waking up a device. As shown in FIG. 9, the apparatus includes: a receiving unit 71, a transmitting unit 72, and a switching unit 73.

A device that supports Wi-Fi includes a Wi-Fi chip, where the Wi-Fi chip is connected to an antenna by using a radio frequency circuit, and is configured to transmit and receive Wi-Fi signals. In addition, the device includes an application (Application, APP) chip, where the APP chip is configured to run a processor of a Wi-Fi control module, where the Wi-Fi control module is configured to control the Wi-Fi chip. Thereby, the APP chip may control, by using the Wi-Fi control module, the Wi-Fi chip to switch to a STA mode or switch to an AP mode.

The receiving unit 71 is configured to receive a wake-up password transmitted by a second device by using a communications technology, where the first device is a device waked up by the second device.

The transmitting unit 72 is configured to transmit a first message to the second device, so that the second device switches to the STA mode after receiving the first message, where the first message is used to notify the second device that the first device is waked up successfully.

The switching unit 73 is configured to switch to the AP mode, so that the second device implements wireless fidelity Wi-Fi access through the first device.

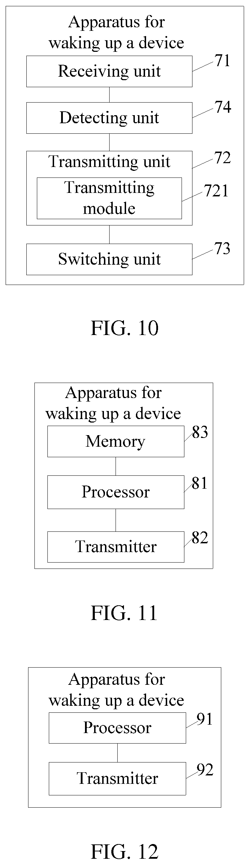

Further, as shown in FIG. 10, the apparatus may include a detecting unit 74.

The detecting unit 74 is configured to detect, after the receiving unit 71 receives the wake-up password transmitted by the second device by using the communications technology, whether the second device corresponding to the wake-up password exists in a pre-stored list of devices that can wake up the first device.

Further, the second unit 72 may include a transmitting module 721.

The transmitting module 721 is configured to transmit the first message to the second device when the detecting unit 74 detects that the second device corresponding to the wake-up password exists in the pre-stored list of devices that can wake up the first device.

With the apparatus for waking up a device according to the embodiment of the present invention, when a first device receives a wake-up password transmitted by a second device by using a communications technology, the first device transmits a first message to the second device, where the first message is used to instruct the second device to switch to a STA mode, and switches itself to an AP mode, so that the second device implements Wi-Fi access through the first device, which improves user experience in a device wake-up process, effectively reduces power consumption of the first device, and prolongs the standby time and service life of batteries.

An embodiment of the present invention provides an apparatus for waking up a device. As shown in FIG. 11, the apparatus includes: a processor 81 and a transmitter 82.

The processor 81 is configured to detect, when a timing interval of a timer is equal to a preset threshold, whether a second device transmits a radio signal, where the first device is a device waked up by the second device.

The transmitter 82 is configured to transmit a first message to the second device when the processor 81 detects the radio signal, so that the second device switches to a station STA mode after receiving the first message, where the first message is used to notify the second device that the first device is waked up successfully.

The processor 81 is further configured to switch to an access point AP mode, so that the second device implements wireless fidelity Wi-Fi access through the first device.

The processor 81 is further configured to disable the Wi-Fi when the radio signal is not detected and restart the timer.

Further, the processor 81 is configured to switch to the STA mode when the radio signal is detected, and implement the Wi-Fi access through the second device.

The transmitter 82 is further configured to transmit the first message to the second device, where the first message carries a switching time to instruct the second device to switch to the STA mode within the switching time.

Further, the apparatus includes a memory 83.

The memory 83 is configured to store wake-up information of the second device before the processor 81 detects whether the second device transmits the radio signal when the timing interval of the timer is equal to the preset threshold, where the wake-up information includes at least a Wi-Fi network identifier.

The processor 81 is further configured to detect, according to the wake-up information stored by the memory 83, whether the second device transmits the radio signal.

With the apparatus for waking up a device according to the embodiment of the present invention, a timing interval of a timer is equal to a preset threshold; when a first device detects a radio signal transmitted by a second device, the first device transmits a first message to the second device, where the first message is used to instruct the second device to switch to a station STA mode; in this case, the first device is waked up, that is, the first device switches to an AP mode, so that the second device may implement Wi-Fi access through the first device The first device switches to the AP mode when the radio signal of the second device is detected, which improves user experience in a device wake-up process; in addition, the first device enters a standby mode when the radio signal of the second device is not detected, which effectively reduces power consumption of the first device and prolongs the standby time and service life of batteries.

An embodiment of the present invention provides an apparatus for waking up a device. As shown in FIG. 12, the apparatus includes: a processor 91 and a transmitter 92.

The processor 91 is configured to switch to an access point AP mode when a timing interval of a timer is equal to a preset threshold, and detect whether a wake-up password transmitted by a second device is received, where the first device is a device waked up by the second device.

The transmitter 92 is configured to transmit a first message to the second device when the processor 91 detects the wake-up password, so that the second device switches to a station STA mode after receiving the first message, and the second device implements wireless fidelity Wi-Fi access through the first device, where the first message is used to notify the second device that the first device is waked up successfully.

The processor 91 is further configured to disable the Wi-Fi when the wake-up password is not detected and restart the timer.

Further, the processor 91 is configured to detect, when the wake-up password is detected, whether the second device corresponding to the wake-up password exists in a pre-stored list of devices that can wake up the first device.

The transmitter 92 is further configured to transmit the first message to the second device when it is detected that the second device corresponding to the wake-up password exists in the list of devices that can wake up the first device.

With the apparatus for waking up a device according to the embodiment of the present invention, when a timing interval of a timer is equal to a preset threshold, a first device enters an AP mode, and when the first device detects a wake-up password transmitted by a second device, the first device transmits a first message to the second device, notifying the second device that the first device is waked up; in this case, the second device switches to a STA mode after receiving a wake-up complete message transmitted by the first device, so that the second device may implement Wi-Fi access through the first device. When the wake-up password of the second device is detected, the first device notifies the second device that the first device is waked up, which improves user experience in a device wake-up process; in addition, when the wake-up password of the second device is not detected, the first device enters a standby mode, which effectively reduces power consumption of the first device and prolongs the standby time and service life of batteries.

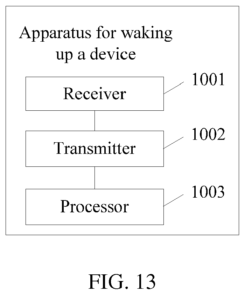

An embodiment of the present invention provides an apparatus for waking up a device. As shown in FIG. 13, the apparatus includes: a receiver 1001, a transmitter 1002, and a processor 1003.

The receiver 1001 is configured to receive a wake-up password transmitted by a second device by using a communications technology, where the first device is a device waked up by the second device.

The transmitter 1002 is configured to transmit a first message to the second device, so that the second device switches to a station STA mode after receiving the first message, where the first message is used to notify the second device that the first device is waked up successfully.

The processor 1003 is configured to switch to an access point AP mode, so that the second device implements wireless fidelity Wi-Fi access through the first device.

Further, the processor 1003 is configured to detect, after the receiver 1001 receives the wake-up password transmitted by the second device by using the communications technology, whether the second device corresponding to the wake-up password exists in a pre-stored list of devices that can wake up the first device.

Further, the transmitter 1002 is configured to transmit the first message to the second device when the processor 1003 detects that the second device corresponding to the wake-up password exists in the list of devices that can wake up the first device.

With the apparatus for waking up a device according to the embodiment of the present invention, when a first device receives a wake-up password transmitted by a second device by using a communications technology, the first device transmits a first message to the second device, where the first message is used to instruct the second device to switch to a STA mode, and switches itself to an AP mode, so that the second device implements Wi-Fi access through the first device, which improves user experience in a device wake-up process, effectively reduces power consumption of the first device, and prolongs the standby time and service life of batteries.

Through the foregoing description of the embodiments, it is clear to a person skilled in the art that the present invention may be implemented by software in addition to necessary universal hardware, and definitely may also be implemented by hardware, but in many cases, the software implementation is preferred. Based on such understanding, the technical solutions of the present invention essentially, or the parts contributing to the prior art may be implemented in the form of a software product. The computer software product is stored in a readable storage medium, for example, a floppy disk, a hard disk, or an optical disc in a computer, and includes several instructions for instructing a computer device (which may be a personal computer, a server, a network device, and the like) to execute the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for waking up a device, comprising:
when a timing interval of a timer is equal to a preset threshold, detecting (203), by a first device, whether a second device transmits a radio signal, wherein the first device is a device waked up by the second device; and
when the radio signal is not detected, disabling (208), by the first device, a wireless fidelity, Wi-Fi, and restarting the timer;
**characterized by**
determining, according to pre-stored wake-up information, whether the second device corresponding to the detected radio signal may wake up the first device;
when the radio signal is detected, preforming the following steps:
switching (204), by the first device, to a station, STA, mode;
transmitting (206), by the first device, a first message to the second device, so that the second device switches to a station, STA, mode after receiving the first message, wherein the first message is used to notify the second device that the first device is waked up successfully; and
switching (207), by the first device, to an access point, AP, mode, so that the second device implements Wi-Fi access through the first device,
wherein the second device is switched to the AP mode for a duration T2 = T0 + 2 * T1, T0 being the preset threshold and T1 being a duration of a detection and access attempt for the first device; and
wherein the second device registers the wake-up information with the first device, when the second device implements Wi-Fi access through the first device to pre-store wake-up information of the second device in the first device, and
wherein the wake-up information comprise a Wi-Fi network identifier of the second device, a ciphering mode and/or a password.

2. The method for waking up a device according to claim 1, wherein the transmitting (206), by the first device when the radio signal is detected, a first message to the second device, comprises:
if the radio signal is detected, implementing, by the first device, the Wi-Fi access through the second device; and
transmitting, by the first device, the first message to the second device, wherein the first message carries a switching time to instruct the second device to switch to the STA mode within the switching time.

3. The method for waking up a device according to claim 1 or 2, wherein: when a timing interval of a timer is equal to a preset threshold, before the detecting (203), by a first device, whether a second device transmits a radio signal, the method further comprises:
storing, by the first device, wake-up information of the second device, wherein the wake-up information comprises at least a Wi-Fi network identifier; and
the detecting (203) whether the second device transmits the radio signal specifically comprises: detecting, by the first device according to the wake-up information, whether the second device transmits the radio signal.

4. The method for waking up a device according to claim 1, further comprising:
detecting, by the first device, whether a wake-up password transmitted by the second device is received;
when the wake-up password is detected, transmitting, by the first device, a first message to the second device, so that the second device switches to a station STA mode after receiving the first message, and the second device implements wireless fidelity Wi-Fi access through the first device, wherein the first message is used to notify the second device that the first device is waked up successfully; and
when the wake-up password is not detected, disabling, by the first device, the Wi-Fi and restarting the timer.

5. The method for waking up a device according to claim 4, wherein the transmitting (206), by the first device when the wake-up password is detected, a first message to the second device, comprises:
when the wake-up password is detected, detecting, by the first device, whether the second device corresponding to the wake-up password exists the a pre-stored list of devices that can wake up the first device; and
if the second device corresponding to the wake-up password exists in the pre-stored list of devices that can wake up the first device, performing the transmitting of the first message to the second device.

6. An apparatus for waking up a device, comprising:
a processor (81), configured to detect, when a timing interval of a timer is equal to a preset threshold, whether a second device transmits a radio signal, where the first device is a device waked up by the second device;
**characterized by**
a transmitter (82), configured to transmit a first message to the second device, where the first message is used to notify the second device that the first device is waked up successfully;
a memory (83), configured to store wake-up information of the second device before the processor (81) detects whether the second device transmits the radio signal when the timing interval of the timer is equal to the preset threshold,
wherein the wake-up information are registered by the second device with the first device, when the second device implements Wi-Fi access through the first device to pre-store the wake-up information of the second device in the memory (83), and
wherein the wake-up information comprise a Wi-Fi network identifier of the second device, a ciphering mode and/or a password; and
when the radio signal is detected:the processor (81) is further configured to detect, according to the wake-up information stored by the memory (83), whether the second device transmitting the detected radio signal may wake-up the first device, and to switch to a station, STA, mode,
the transmitter (82) is configured to transmit the first message to the second device, so that the second device switches to the STA mode after receiving the first message; and then
the processor (81) is further configured to switch to an access point AP mode, so that the second device implements wireless fidelity Wi-Fi access through the first device, wherein the second device is switched to the AP mode for a duration T2 = T0 + 2 * T1, T0 being the preset threshold and T1 being a duration of a detection and access attempt for the first device.

7. The apparatus for waking up a device according to claim 6, wherein
the processor (81) is further configured to implement the Wi-Fi access through the second device when the radio signal is detected; and
the transmitter (82) is further configured to transmit the first message to the second device, where the first message carries a switching time to instruct the second device to switch to the STA mode within the switching time.

8. The apparatus for waking up a device according to claim 6, wherein:
the processor (91) is configured to detect whether a wake-up password transmitted by a second device is received;
the transmitter (92) is configured to transmit the first message to the second device when the processor (91) detects the wake-up password, so that the second device switches to a the STA mode after receiving the first message, and the second device implements wireless fidelity Wi-Fi access through the first device, where the first message is used to notify the second device that the first device is waked up successfully.

9. The apparatus for waking up a device according to claim 8, wherein
the processor (91) is further configured to detect, when the wake-up password is detected, whether the second device corresponding to the wake-up password exists in a pre-stored list of devices that can wake up the first device;
the transmitter (92) is further configured to transmit the first message to the second device when it is detected that the second device corresponding to the wake-up password exists in the list of devices that can wake up the first device.

## Patentansprüche

1. Verfahren zum Aufwecken einer Vorrichtung, umfassend:
wenn ein Timing-Intervall eines Timers gleich einer voreingestellten Schwelle ist,
Detektieren (203), durch eine erste Vorrichtung, ob eine zweite Vorrichtung ein Funksignal übermittelt, wobei die erste Vorrichtung eine durch die zweite Vorrichtung aufgeweckte Vorrichtung ist; und,
wenn das Funksignal nicht detektiert wird, Deaktivieren (208), durch die erste Vorrichtung, eines "Wireless Fidelity" bzw. Wi-Fi und Neustarten des Timers;
**gekennzeichnet durch**
Bestimmen, gemäß vorgespeicherten Aufweckinformationen, ob die zweite Vorrichtung, die dem detektierten Funksignal entspricht, die erste Vorrichtung aufwecken soll;
wenn das Funksignal detektiert wird, Durchführen der folgenden Schritte:
Umschalten (204), durch die erste Vorrichtung, in einen Stationsmodus bzw. STA-Modus;
Übermitteln (206), durch die erste Vorrichtung, einer ersten Nachricht zur zweiten Vorrichtung, so dass die zweite Vorrichtung nach dem Empfang der ersten Nachricht in einen Stationsmodus bzw. STA-Modus umschaltet, wobei die erste Nachricht dazu verwendet wird, die zweite Vorrichtung zu benachrichtigen, dass die erste Vorrichtung erfolgreich aufgeweckt wird; und
Umschalten (207), durch die erste Vorrichtung, in einen Zugangspunktmodus bzw. AP-Modus, so dass die zweite Vorrichtung einen Wi-Fi-Zugang über die erste Vorrichtung implementiert,
wobei die zweite Vorrichtung in den AP-Modus für eine Dauer von T2 = T0 + 2 * T1 umgeschaltet wird, wobei T0 die voreingestellte Schwelle ist und T1 eine Dauer eines Detektions- und Zugangsversuchs für die erste Vorrichtung ist; und
wobei die zweite Vorrichtung die Aufweckinformationen mit der ersten Vorrichtung registriert, wenn die zweite Vorrichtung den Wi-Fi-Zugang über die erste Vorrichtung implementiert, um Aufweckinformationen der zweiten Vorrichtung in der ersten Vorrichtung vorzuspeichern, und
wobei die Aufweckinformationen eine Wi-Fi-Netzwerkkennung der zweiten Vorrichtung, einen Verschlüsselungsmodus und/oder ein Passwort umfassen.

2. Verfahren zum Aufwecken einer Vorrichtung nach Anspruch 1, wobei das Übermitteln (206), durch die erste Vorrichtung, wenn das Funksignal detektiert wird, einer ersten Nachricht zur zweiten Vorrichtung Folgendes umfasst:
falls das Funksignal detektiert wird, Implementieren, durch die erste Vorrichtung, des Wi-Fi-Zugangs über die zweite Vorrichtung und
Übermitteln, durch die erste Vorrichtung, der ersten Nachricht zur zweiten Vorrichtung, wobei die erste Nachricht eine Umschaltzeit zum Anweisen der zweiten Vorrichtung, innerhalb der Umschaltzeit in den STA-Modus umzuschalten, führt.

3. Verfahren zum Aufwecken einer Vorrichtung nach Anspruch 1 oder 2, wobei, wenn ein Timing-Intervall eines Timers gleich einer voreingestellten Schwelle ist, das Verfahren vor dem Detektieren (203), durch eine erste Vorrichtung, ob eine zweite Vorrichtung ein Funksignal übermittelt, ferner Folgendes umfasst:
Speichern, durch die erste Vorrichtung, von Aufweckinformationen der zweiten Vorrichtung, wobei die Aufweckinformationen mindestens eine Wi-Fi-Netzwerkkennung umfassen; und
das Detektieren (203), ob die zweite Vorrichtung das Funksignal übermittelt, spezifisch Folgendes umfasst: Detektieren, durch die erste Vorrichtung gemäß den Aufweckinformationen, ob die zweite Vorrichtung das Funksignal übermittelt.

4. Verfahren zum Aufwecken einer Vorrichtung nach Anspruch 1, ferner umfassend:
Detektieren, durch die erste Vorrichtung, ob ein durch die zweite Vorrichtung übermitteltes Aufweckpasswort empfangen wird;
wenn das Aufweckpasswort detektiert wird, Übermitteln, durch die erste Vorrichtung, einer ersten Nachricht zur zweiten Vorrichtung, so dass die zweite Vorrichtung nach dem Empfang der ersten Nachricht in einen Stationsmodus bzw. STA-Modus umschaltet und die zweite Vorrichtung einen "Wireless Fidelity"-Zugang bzw. Wi-Fi-Zugang über die erste Vorrichtung implementiert, wobei die erste Nachricht dazu verwendet wird, die zweite Vorrichtung zu benachrichtigen, dass die erste Vorrichtung erfolgreich aufgeweckt wird; und,
wenn das Aufweckpasswort nicht detektiert wird, Deaktivieren, durch die erste Vorrichtung, des Wi-Fi und Neustarten des Timers.

5. Verfahren zum Aufwecken einer Vorrichtung nach Anspruch 4, wobei das Übermitteln (206), durch die erste Vorrichtung, wenn das Aufweckpasswort detektiert wird, einer ersten Nachricht zur zweiten Vorrichtung Folgendes umfasst:
wenn das Aufweckpasswort detektiert wird, Detektieren, durch die erste Vorrichtung, ob die zweite Vorrichtung, die dem Aufweckpasswort entspricht, in einer vorgespeicherten Liste von Vorrichtungen, die die erste Vorrichtung aufwecken können, vorhanden ist; und,
falls die zweite Vorrichtung, die dem Aufweckpasswort entspricht, in der vorgespeicherten Liste von Vorrichtungen, die die erste Vorrichtung aufwecken können, vorhanden ist, Durchführen des Übermittelns der ersten Nachricht zur zweiten Vorrichtung.

6. Einrichtung zum Aufwecken einer Vorrichtung, umfassend:
einen Prozessor (81), der, wenn ein Timing-Intervall eines Timers gleich einer voreingestellten Schwelle ist, konfiguriert ist zum Detektieren, ob eine zweite Vorrichtung ein Funksignal übermittelt, wobei die erste Vorrichtung eine durch die zweite Vorrichtung aufgeweckte Vorrichtung ist;
**gekennzeichnet durch**
einen Sender (82), der konfiguriert ist zum Übermitteln einer ersten Nachricht zur zweiten Vorrichtung, wobei die erste Nachricht dazu verwendet wird, die zweite Vorrichtung zu benachrichtigen, dass die erste Vorrichtung erfolgreich aufgeweckt wird;
einen Speicher (83), der konfiguriert ist zum Speichern von Aufweckinformationen der zweiten Vorrichtung, bevor der Prozessor (81) detektiert, ob die zweite Vorrichtung das Funksignal übermittelt, wenn das Timing-Intervall des Timers gleich der voreingestellten Schwelle ist,
wobei die Aufweckinformationen durch die zweite Vorrichtung mit der ersten Vorrichtung registriert werden, wenn die zweite Vorrichtung einen Wi-Fi-Zugang über die erste Vorrichtung implementiert, um die Aufweckinformationen der zweiten Vorrichtung im Speicher (83) vorzuspeichern, und
wobei die Aufweckinformationen eine Wi-Fi-Netzwerkkennung der zweiten Vorrichtung, einen Verschlüsselungsmodus und/oder ein Passwort umfassen; und wenn das Funksignal detektiert wird, der Prozessor (81) ferner konfiguriert ist zum Detektieren, gemäß den durch den Speicher (83) gespeicherten Aufweckinformationen, ob die zweite Vorrichtung, die das detektierte Funksignal übermittelt, die erste Vorrichtung aufwecken soll, und zum Umschalten in einen Stationsmodus bzw. STA-Modus,
der Sender (82) konfiguriert ist zum Übermitteln der ersten Nachricht zur zweiten Vorrichtung, so dass die zweite Vorrichtung nach dem Empfang der ersten Nachricht in den STA-Modus umschaltet; und dann
der Prozessor (81) ferner konfiguriert ist zum Umschalten in einen Zugangspunktmodus bzw. AP-Modus, so dass die zweite Vorrichtung einen "Wireless Fidelity"-Zugang bzw. Wi-Fi-Zugang über die erste Vorrichtung implementiert, wobei die zweite Vorrichtung in den AP-Modus für eine Dauer von T2 = T0 + 2 * T1 umgeschaltet wird, wobei T0 die voreingestellte Schwelle ist und
T1 eine Dauer eines Detektions- und Zugangsversuchs für die erste Vorrichtung ist.

7. Einrichtung zum Aufwecken einer Vorrichtung nach Anspruch 6, wobei:
der Prozessor (81) ferner konfiguriert ist zum Implementieren des Wi-Fi-Zugangs über die zweite Vorrichtung, wenn das Funksignal detektiert wird; und
der Sender (82) ferner konfiguriert ist zum Übermitteln der ersten Nachricht zur zweiten Vorrichtung, wobei die erste Nachricht eine Umschaltzeit zum Anweisen der zweiten Vorrichtung, innerhalb der Umschaltzeit in den STA-Modus umzuschalten, führt.

8. Einrichtung zum Aufwecken einer Vorrichtung nach Anspruch 6, wobei:
der Prozessor (91) konfiguriert ist zum Detektieren, ob ein durch eine zweite Vorrichtung übermitteltes Aufweckpasswort empfangen wird;
der Sender (92) konfiguriert ist zum Übermitteln der ersten Nachricht zur zweiten Vorrichtung, wenn der Prozessor (91) das Aufweckpasswort detektiert, so dass die zweite Vorrichtung nach dem Empfang der ersten Nachricht in den STA-Modus umschaltet und die zweite Vorrichtung einen "Wireless Fidelity"-Zugang bzw. Wi-Fi-Zugang über die erste Vorrichtung implementiert, wobei die erste Nachricht dazu verwendet wird, die zweite Vorrichtung zu benachrichtigen, dass die erste Vorrichtung erfolgreich aufgeweckt wird.

9. Einrichtung zum Aufwecken einer Vorrichtung nach Anspruch 8, wobei:
der Prozessor (91) ferner konfiguriert ist zum Detektieren, wenn das Aufweckpasswort detektiert wird, ob die zweite Vorrichtung, die dem Aufweckpasswort entspricht, in einer vorgespeicherten Liste von Vorrichtungen, die die erste Vorrichtung aufwecken können, vorhanden ist;
der Sender (92) ferner konfiguriert ist zum Übermitteln der ersten Nachricht zur zweiten Vorrichtung, wenn detektiert wird, dass die zweite Vorrichtung, die dem Aufweckpasswort entspricht, in der Liste von Vorrichtungen, die die erste Vorrichtung aufwecken können, vorhanden ist.

## Revendications

1. Procédé pour réveiller un dispositif, comprenant :
lorsqu'un intervalle de temporisation d'un temporisateur est égal à un seuil prédéfini, détecter (203), par un premier dispositif, si un second dispositif transmet un signal radio, dans lequel le premier dispositif est un dispositif réveillé par le second dispositif ; et
lorsque le signal radio n'est pas détecté, désactiver (208), par le premier dispositif, une fidélité sans fil, Wi-Fi, et redémarrer le temporisateur ;
**caractérisé par**
déterminer, en fonction d'informations de réveil préenregistrées, si le second dispositif correspondant au signal radio détecté peut réveiller le premier dispositif ;
lorsque le signal radio est détecté, effectuer les étapes suivantes :
basculer (204), par le premier dispositif, sur mode station, STA ;
transmettre (206), par le premier dispositif, un premier message au second dispositif, de sorte que le second dispositif bascule sur un mode station, STA, après avoir reçu le premier message, dans lequel le premier message est utilisé pour avertir le second dispositif que le premier dispositif est réveillé avec succès ; et
basculer (207), par le premier dispositif, sur un mode point d'accès, AP, de sorte que le second dispositif met en oeuvre un accès Wi-Fi par l'intermédiaire du premier dispositif,
dans lequel le second dispositif est commuté sur le mode AP pendant une durée T2 = T0 + 2 * T1, T0 étant le seuil prédéfini, et T1 étant une durée d'une tentative de détection et d'accès pour le premier dispositif ; et
dans lequel le second dispositif enregistre les informations de réveil avec le premier dispositif, lorsque le second dispositif met en oeuvre un accès Wi-Fi par l'intermédiaire du premier dispositif pour préenregistrer des informations de réveil du second dispositif dans le premier dispositif, et
dans lequel les informations de réveil comprennent un identificateur de réseau Wi-Fi du second dispositif, un mode de chiffrement et/ou un mot de passe.

2. Procédé pour réveiller un dispositif selon la revendication 1, dans lequel la transmission (206), par le premier dispositif, lorsque le signal radio est détecté, d'un premier message au second dispositif, comprend :
si le signal radio est détecté, mettre en oeuvre, par le premier dispositif, l'accès Wi-Fi par l'intermédiaire du second dispositif ; et
transmettre, par le premier dispositif, le premier message au second dispositif, dans lequel le premier message contient un temps de commutation pour ordonner au second dispositif de basculer sur le mode STA dans le temps de commutation.

3. Procédé pour réveiller un dispositif selon la revendication 1 ou 2, dans lequel :
lorsqu'un intervalle de temporisation d'un temporisateur est égal à un seuil prédéterminé, avant de détecter (203), par un premier dispositif, si un second dispositif transmet un signal radio, le procédé comprend en outre :
enregistrer, par le premier dispositif, des informations de réveil du second dispositif, dans lequel les informations de réveil comprennent au moins un identificateur de réseau Wi-Fi ; et
la détection (203) pour savoir si le second dispositif transmet le signal radio comprend spécifiquement : détecter, par le premier dispositif, en fonction des informations de réveil, si le second dispositif transmet le signal radio.

4. Procédé pour réveiller un dispositif selon la revendication 1, comprenant en outre :
détecter, par le premier dispositif, si un mot de passe de réveil transmis par le second dispositif est reçu ;
lorsque le mot de passe de réveil est détecté, transmettre, par le premier dispositif, un premier message au second dispositif, de sorte que le second dispositif bascule sur un mode station, STA, après avoir reçu le premier message, et le second dispositif met en oeuvre un accès à fidélité sans fil, Wi-Fi, par l'intermédiaire du premier dispositif, dans lequel le premier message est utilisé pour avertir le second dispositif que le premier dispositif est réveillé avec succès ; et
lorsque le mot de passe de réveil n'est pas détecté, désactiver, par le premier dispositif, le Wi-Fi, et redémarrer le temporisateur.

5. Procédé pour réveiller un dispositif selon la revendication 4, dans lequel la transmission (206), par le premier dispositif, lorsque le mot de passe de réveil est détecté, d'un premier message au second dispositif, comprend :
lorsque le mot de passe de réveil est détecté, détecter, par le premier dispositif, si le second dispositif correspondant au mot de passe de réveil existe dans une liste préenregistrée de dispositifs qui peuvent réveiller le premier dispositif ; et
si le second dispositif correspondant au mot de passe de réveil existe dans la liste préenregistrée de dispositifs pouvant réveiller le premier dispositif, effectuer la transmission du premier message au second dispositif.

6. Appareil pour réveiller un dispositif, comprenant :
un processeur (81), configuré pour détecter, lorsqu'un intervalle de temporisation d'un temporisateur est égal à un seuil prédéfini, si un second dispositif transmet un signal radio, le premier dispositif étant un dispositif réveillé par le second dispositif ;
**caractérisé par**
un transmetteur (82), configuré pour transmettre un premier message au second dispositif, le premier message étant utilisé pour avertir le second dispositif que le premier dispositif est réveillé avec succès ;
une mémoire (83), configurée pour enregistrer des informations de réveil du second dispositif avant que le processeur (81) ne détecte si le second dispositif transmet le signal radio lorsque l'intervalle de temporisation du temporisateur est égal au seuil prédéfini,
dans lequel les informations de réveil sont enregistrées par le second dispositif avec le premier dispositif, lorsque le second dispositif met en oeuvre un accès Wi-Fi par l'intermédiaire du premier dispositif pour préenregistrer les informations de réveil du second dispositif dans la mémoire (83), et
dans lequel les informations de réveil comprennent un identificateur de réseau Wi-Fi du second dispositif, un mode de chiffrement et/ou un mot de passe ; et
lorsque le signal radio est détecté, le processeur (81) est en outre configuré pour détecter, en fonction des informations de réveil enregistrées par la mémoire (83), si le second dispositif transmettant le signal radio détecté peut réveiller le premier dispositif, et pour basculer sur un mode station, STA,
le transmetteur (82) est configuré pour transmettre le premier message au second dispositif, de sorte que le second dispositif bascule sur le mode STA après avoir reçu le premier message ; et ensuite
le processeur (81) est en outre configuré pour basculer sur un mode point d'accès AP, de sorte que le second dispositif met en oeuvre un accès à fidélité sans fil, Wi-Fi, par l'intermédiaire du premier dispositif, dans lequel le second dispositif est commuté sur le mode AP pendant une durée T2 = T0 + 2 * T1, T0 étant le seuil prédéfini, et T1 étant la durée d'une tentative de détection et d'accès pour le premier dispositif.

7. Appareil pour réveiller un dispositif selon la revendication 6, dans lequel
le processeur (81) est en outre configuré pour mettre en oeuvre l'accès Wi-Fi par l'intermédiaire du second dispositif lorsque le signal radio est détecté ; et
le transmetteur (82) est en outre configuré pour transmettre le premier message au second dispositif, le premier message contenant un temps de commutation pour ordonner au second dispositif de basculer sur le mode STA pendant le temps de commutation.

8. Appareil pour réveiller un dispositif selon la revendication 6, dans lequel :
le processeur (91) est configuré pour détecter si un mot de passe de réveil transmis par un second dispositif est reçu ;
le transmetteur (92) est configuré pour transmettre le premier message au second dispositif lorsque le processeur (91) détecte le mot de passe de réveil, de sorte que le second dispositif bascule sur le mode STA après avoir reçu le premier message, et le second dispositif met en oeuvre un accès à fidélité sans fil, Wi-Fi, par l'intermédiaire du premier dispositif, le premier message étant utilisé pour avertir le second dispositif que le premier dispositif est réveillé avec succès.

9. Appareil pour réveiller un dispositif selon la revendication 8, dans lequel
le processeur (91) est en outre configuré pour détecter, lorsque le mot de passe de réveil est détecté, si le second dispositif correspondant au mot de passe de réveil existe dans une liste préenregistrée de dispositifs qui peuvent réveiller le premier dispositif ;
le transmetteur (92) est en outre configuré pour transmettre le premier message au second dispositif lorsqu'il est détecté que le second dispositif correspondant au mot de passe de réveil existe dans la liste des appareils pouvant réveiller le premier dispositif.
